**Europäisches Patentamt**

**European Patent Office**

**Office européen des brevets**

(19)

(11) Veröffentlichungsnummer : **0 350 734 B1**

(12)

# EUROPÄISCHE PATENTSCHRIFT

(45) Veröffentlichungstag der Patentschrift :
**02.09.92 Patentblatt 92/36**

(51) Int. Cl.$^5$ : **F16N 7/32,** F04B 43/08,
F16N 29/02, F16N 27/00

(21) Anmeldenummer : **89111976.0**

(22) Anmeldetag : **30.06.89**

(54) Piezoelektrische Schmiereinrichtung für ein Lager.

(30) Priorität : **11.07.88 DE 3823497**

(43) Veröffentlichungstag der Anmeldung :
**17.01.90 Patentblatt 90/03**

(45) Bekanntmachung des Hinweises auf die
Patenterteilung :
**02.09.92 Patentblatt 92/36**

(84) Benannte Vertragsstaaten :
**AT BE CH DE ES FR GB GR IT LI LU NL SE**

(56) Entgegenhaltungen :
**EP-A- 0 078 420
EP-A- 0 078 421
DE-A- 1 453 655**

(56) Entgegenhaltungen :
**DE-A- 2 542 036
DE-A- 3 421 082
DE-U- 8 704 314
FR-A- 1 282 158
US-A- 3 520 641
US-A- 4 519 751**

(73) Patentinhaber : **SIEMENS
AKTIENGESELLSCHAFT
Wittelsbacherplatz 2
W-8000 München 2 (DE)**

(72) Erfinder : **Däges, Johannes, Dr.
Kreuzbühlstrasse 5
W-8620 Lichtenfels (DE)**
Erfinder : **Diener, Karl-Friedrich
Riemenschneiderstrasse 25
W-8723 Gerolzhofen (DE)**

EP 0 350 734 B1

## Beschreibung

Die Erfindung bezieht sich auf eine Schmiereinrichtung für ein Lager, über dem ein Gasdruckgradient besteht, mit dem eine dosierte Schmiermittelmenge in das Lager eingebracht wird, insbesondere für ein hochtourig drehendes Lager. Die Erfindung ist beispielsweise anwendbar bei einem Kugellager, Nadellager oder auch bei einem Wälzlager, z. B. in einer Spindel für eine Werkzeugmaschine.

Bei einem Lager kommt es darauf an, optimale Bedingungen für die Schmierung aufrechtzuerhalten. Bei einem hochtourig drehenden Wälzlager beispielsweise hängt der Wirkungsgrad stark von der richtig dosierten Schmiermittelmenge ab. Bei zuviel Schmiermittel wird die zu leistende Reibungsarbeit groß, und die vom Lager verbrauchte Energie nimmt stark zu. Das beeinträchtigt natürlich die Effizienz der Anlage, in der das Lager eingesetzt ist. Bei einer zu geringen Schmierung dagegen reißt der Schmiermittelfilm ab. Das Lager läuft heiß und kann sich im Extremfall "festfressen". Untersuchungen an Wälzlagern haben ergeben ("Kugellager-Zeitschrift" 208, 1981, Seiten 4 bis 10, insbesondere Bild 1), daß bereits geringe Änderungen der dem Lager pro Zeit zugeführten Ölmenge aus dem optimalen Arbeitsbereich herausführen können. Aus Sicherheitsgründen wurden bisher häufig die Dimensionierung des Lagers und die Schmiermittelzufuhr so bemessen, daß der Betrieb außerhalb des optimalen Bereichs erfolgte. Es ist aber das Bestreben, den optimalen Bereich möglichst gut und dauerhaft einzuhalten.

Stand der Technik ist die sogenannte Ölluftschmierung, vergleiche "Kugellager-Zeitschrift" 208, 1981, Seiten 4 bis 10, insbesondere Bild 4. Dabei wird durch ein relativ langes Rohr, das zum Lager führt, in gewissen zeitlichen Abständen eine kleine Menge Öl mechanisch dosiert zugeführt. Dieses Öl wird durch Preßluft und Schwerkraft entlang der Wandung des Rohres allmählich zu einem gleichmäßig dünnen Film verteilt. Bei Erreichen des Rohrendes in der Nähe des Lagers reißt der Film ab. Durch die durch das Lager geführte Preßluft werden die dabei entstehenden kleinen Schmiermittelpartikel in das Lager gebracht. Mit anderen Worten, diese Partikel werden aufgrund des Gradienten, der infolge der Druckluft über dem Lager entsteht, in das Lager eingebracht. Bei dieser herkömmlichen Art der Schmierung wird angestrebt, dem Lager kontinuierlich eine vorgegebene Dosierrate zuzuführen, obwohl das Schmieröl diskontinuierlich aufgegeben wird. Um diesen Zweck zu erreichen, ist das erwähnte lange Rohr unabdingbar. Erst durch eine Mindestlänge des Rohres und damit verbundene lange Fließzeiten unter der Wirkung von Druckluft und Schwerkraft ist es möglich, das dosierte Öl an der Rohrwand zu einem gleichmäßigen Film zu verteilen, bevor die an der Austrittsöffnung vom Film abreißenden Partikel durch den Luftstrom ins nahe Lager transportiert werden. Infolge der langen Fließzeit tritt bei einem solchen herkömmlichen Schmiersystem eine Änderung der Lagerschmierung nach einer Änderung der Dosiermenge erst nach vielen Minuten oder sogar Stunden ein.

Hieraus wird deutlich, daß der optimale Arbeitspunkt bei der Schmierung nur sehr schwierig einzustellen ist. Eine Einstellung auf diesen Arbeitspunkt ist sogar mit einem gewissen Risiko behaftet. Darüber hinaus wird deutlich, daß die Dosierung nicht schnell genug wechselnden Schmierbedingungen folgen kann.

Des weiteren ist durch die EP-A-0 078 420 ein Schmiersystem für ein Lager bekannt geworden, bei dem die Schmiermittelzufuhr in Abhängigkeit von der Lagertemperatur erfolgt. Hierzu ist ein Temperatursensor an dem zu schmierenden Lager befestigt. Der Temperatursensor steuert einen Mikrocomputer über einen A/D-Converter. Der Mikrocomputer seinerseits steuert synchron sowohl ein Ventil für die Schmiermittelzufuhr und ein Ventil für die Druckluft. Die Druckluft- und die Schmiermittelleitung sind an einem herkömmlichen Druckluft betriebenen Zerstäuber angeschlossen, dessen Austrittsdüse unmittelbar zum Lager ausgerichtet ist. Durch dieses Schmiersystem wird es möglich, die Schmiermittelzufuhr so zu steuern, daß eine Überhitzung des Lagers vermieden wird. Die bei Aktivierung dieses Schmiersystems abgebbare Schmiermittelmenge läßt sich jedoch nicht beliebig verringern. Die abgebbare Mindestmenge ist weit größer als für die optimale Schmierung mittlerer und kleinerer Lager erforderlich und erwünscht ist. Daher ist mit diesem Schmiersystem auch kein kontinuierlicher Betrieb des Lagers mit optimiertem Schmiermittelfilm möglich.

Durch die DE-A-34 21 082 ist schließlich ein piezoelektrisches Förder- und Dosiergerät bekannt, mit dem man sehr kleine Flüssigkeitsmengen dosiert pumpen kann. Hierbei wird die pulsierende Volumenänderung ausgenutzt, die ein Röhrchen aus piezokeramischem Material bei angelegter Wechselspannung vollführt. Dieses Gerät ist für die Injektion kleinster Mengen eines Medikaments in den Körper eines Lebewesens vorgesehen. Dieser Druckschrift ist nicht zu entnehmen, wie die geförderten geringen Flüssigkeitsmengen zerstäubt werden. Auch fehlt hier jeder Bezug zu einem Schmiersystem.

Aufgabe der vorliegenden Erfindung ist es demzufolge, eine Schmiereinrichtung der eingangs genannten Art derart auszugestalten, daß eine hinreichend feine Dosierung bei der Schmierung möglich ist, um in der Nähe des optimalen Arbeitsbereichs des Lagers arbeiten zu können. Darüber hinaus soll eine schnelle, d. h. im Sekundenbereich liegende, Anpassung an den Schmiermittelbedarf des Lagers vorgenommen werden können.

Zur Lösung dieser Aufgabe ist die Schmiereinrichtung erfindungsgemäß gekennzeichnet durch ein als Pumpe betreibbares piezoelektrisches Röhrchen, dem das Schmiermittel zuführbar und von dem das Schmiermittel in ein strömendes Fördergas einbringbar ist, wobei das Fördergas aufgrund des Druckgradienten durch das Lager hindurchleitbar ist, durch mindestens einen Sensor für den Betriebszustand des Lagers, durch eine an den Sensor angeschlossene elektrische Steuereinrichtung für das piezoelektrische Röhrchen und durch Unterbringung des Röhrchens in einem Führungsrohr für das Fördergas.

Die Zudosierung des Schmiermittels kann sehr viel schneller an den jeweiligen momentanen Schmiermittelbedarf des Lagers angepaßt werden, wenn in besonders zweckmäßiger Weiterbildung der Erfindung das als Pumpe betreibbare piezoelektrische Röhrchen Schmiermitteltropfen in den in gleicher Richtung vorbeiströmenden Fördergasstrom hineinschleudert. In diesem Fall wird die zudosierte Schmiermittelmenge momentan in das gleichsinnig strömende Fördergas geschleudert und mit diesem direkt ins Lager transportiert. Es entfällt somit die bei anderen preßluftgetriebenen Schmiereinrichtungen erfolgte Verteilung längs der Wandung des Schmiermittelrohres mit der zeitlich verzögerten Weiterleitung ins Lager. Auch wird dadurch eine wesentliche Voraussetzung dafür geschaffen, daß eine exakt definiert abgegebene Schmiermittelmenge auch unmittelbar ohne allzu große Wandverluste am Lager ankommt.

Die Dosierbarkeit des Schmiermittels läßt sich deutlich verbessern, wenn in zweckmäßiger Weiterbildung der Erfindung die Größe der Schmiermitteltropfen und/oder die Zahl der Schmiermitteltropfen je Zeiteinheit durch die Zahl der elektrischen Spannungsimpulse je Zeiteinheit und deren Amplitude beeinflußbar ist. Damit bekommt der Anwender zwei Steuergrößen in die Hand, mit denen er die Schmiermitteldosierung in weiten Grenzen schnell an den jeweiligen Bedarf anpassen kann.

Hierbei hat es sich als besonders vorteilhaft erwiesen, wenn das piezoelektrische Röhrchen in Ausgestaltung der Erfindung mit Hochfrequenzimpulsen beaufschlagt wird. Wird das piezoelektrische Röhrchen zu diesem Zweck an eine Hochfrequenzspannungsquelle angeschlossen, so kann diese intervallmäßig betrieben werden. Dies kann sowohl mit unterschiedlich langen Pausen und/oder auch unterschiedlich langen Einschaltzeiten geschehen.

Die exakte Zudosierung vorgegebener Schmiermittelmengen läßt sich verbessern, wenn in Weiterbildung der Erfindung die Formgebung und Einbauweise des piezoelektrischen Röhrchens im Führungsrohr so ausgeführt ist, daß die herausgeschleuderten Tröpfchen bei minimierter Turbulenz des Fördermediums ohne vorliegenden Wandkonktakt direkt ins Lager geleitet werden. Durch den strömungsgünstigen Einbau des Schmiermittel-Zuführungsrohres und des piezoelektrischen Röhrchens im Führungsrohr wird die Turbulenz soweit als möglich vermindert und so mit auch verhindert, daß nennenswerte Mengen an ausgestoßenen Schmiermitteltröpfchen durch die Berührung mit der Wandung nur verzögert in das Lager gelangen.

Eine bevorzugte Ausbildung zeichnet sich dadurch aus, daß das piezoelektrische Röhrchen an der Eintrittsseite des Schmiermittels mit einem Schmiermittel-Zuführungsrohr versehen ist, welches insbesondere aus einem Metall besteht. Das Schmiermittel-Zuführungsrohr ist hierbei bevorzugt seitwärts durch ein Führungsrohr geführt, in dem das piezoelektrische Röhrchen untergebracht ist. Auch dieses Führungsrohr besteht bevorzugt aus einem Metall. Zur seitwärtigen Hindurchführung kann dabei eine Dichtungsmanschette vorgesehen sein, die bevorzugt aus einem elektrisch isolierenden Material besteht.

Bei diesen Ausbildungen ergibt sich die Möglichkeit, daß das piezoelektrische Röhrchen über das Schmiermittelrohr einerseits und über das Führungsrohr sowie über einen aus Metall bestehenden Positionshalter andererseits mit je einem elektrischen Anschluß verbunden ist. An diese Anschlüsse kann eine Spannung vorgegebener Höhe und Frequenz gelegt werden, über die die Ausbringrate und die Tröpfchengeschwindigkeit dem jeweiligen Bedarf angepaßt werden können.

Gemäß einer besonders bevorzugten Ausführungsform ist das piezoelektrische Röhrchen Stellglied in einem Regelkreis. Hierbei kann es sich insbesondere um einen elektrischen Temperaturregelkreis handeln, der zur Überwachung der Lager-Temperatur vorgesehen ist. Eine Basisrate kann an dem Regler des Regelkreises durch Aufschaltung eines Sollwertes eingestellt werden, der von dem Ausgangssignal eines an dem Lager angeordneten Drehzahlsensors bestimmt ist.

Weitere vorteilhafte Ausgestaltungen der Erfindung sind in den Unteransprüchen gekennzeichnet.

Infolge der Verwendung eines piezoelektrischen Röhrchens, das als "Mikropumpe" betrieben wird, ist es möglich, die Dosierung sehr schnell wechselnden Schmierbedingungen anzupassen. Dadurch ist sogar ein Betrieb bei optimalem Arbeitspunkt möglich. Wird ein Regelkreis mit einem Temperatursensor verwendet, so kann der optimale Arbeitspunkt feinfühlig eingehalten werden. Tritt der Fall einer zu geringen Schmierung auf, so äußert sich dieses in einer Temperaturerhöhung, die mittels des Temperatursensors erfaßt wird, welcher wiederum über eine Steuerelektronik oder einen Regler die Mikropumpe (piezoelektrisches Röhrchen) entsprechend einstellt. Auf diese Weise ist die Dosierung sehr schnell regelbar. Die von der Mikropumpe ausgebrachten Schmiermittel-Tröpfchen sind so klein und können in ihrer zeitlichen Folge so eingestellt werden, daß auch kleinste Abweichungen vom optimalen Arbeitspunkt aufgefangen werden können. Mit anderen Worten: Der Regelkreis sorgt dafür, daß automatisch, d. h. ohne Eingriff einer bedienenden Person, der optimale Arbeitspunkt erreicht und eingehalten wird.

Ausführungsbeispiele der Erfindung werden im folgenden anhand von drei Figuren näher erläutert. Es zeigen:

Fig. 1 eine Schmiereinrichtung für ein Lager in einer Schnittdarstellung,

Fig. 2 einen Schnitt durch die Schmiereinrichtung von Fig. 1 entlang der Linie II-II und

Fig. 3 eine Schmiereinrichtung für ein hochtourig drehendes Wälzlager, die in einem Temperatur-Regelkreis eingesetzt ist.

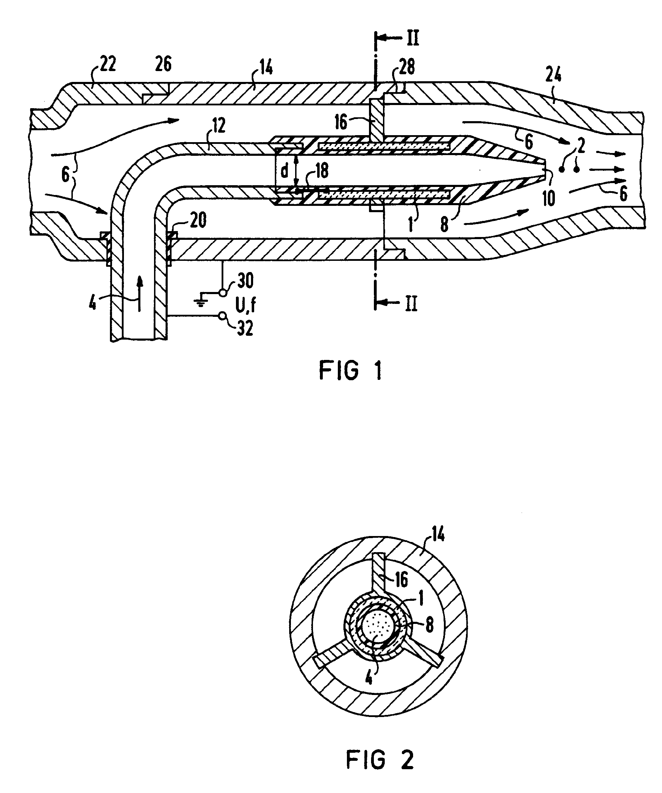

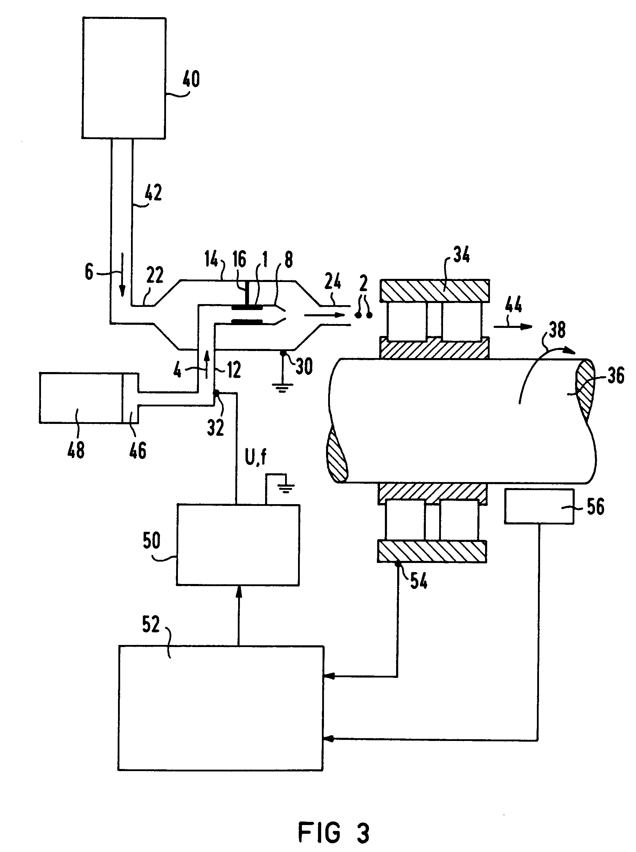

Nach Fig. 1 enthält eine Schmiereinrichtung für ein hochtourig drehendes Lager als Kernstück ein piezoelektrisches Röhrchen 1, das insbesondere aus einer Piezokeramik gefertigt sein kann. Dieses piezoelektrische Röhrchen 1 wird als Pumpe, speziell als "Mikropumpe", verwendet. Es ist extern durch elektrische Impulse steuerbar, die die Spannung U und die Wiederhol-Frequenz f besitzen. Die "Mikropumpe" sorgt dafür, daß beim Dosiervorgang steuerbar kleinste Tröpfchen 2 eines Schmiermittels 4, die einen Durchmesser von weniger als 100 $\mu$ besitzen, in einen das zu schmierende Lager durchströmenden Fördergas-Strom 6 geschleudert werden. Das piezokeramische Röhrchen 1 kann beispielsweise eine Länge von 13 mm, einen Außendurchmesser von 2,1 mm und einen Innendurchmesser von 1 mm oder weniger besitzen. Bekanntlich zieht sich ein solches piezoelektrisches Röhrchen 1 bei Beaufschlagung mit einem elektrischen Impuls zusammen. Es verringert dadurch sein Innenvolumen und schleudert aus seinem Innenraum ein Flüssigkeitströpfchen 2 heraus. Bei einer Größe der Flüssigkeitströpfchen 2 von ca. 80 $\mu$ sind mit solchen piezoelektrischen Röhrchen 1 Ausbringgeschwindigkeiten von mehreren Metern pro Sekunde erreichbar. Ein Zurückfließen des Schmiermittels 4 kann durch eine Drosselklappe oder durch ein Rückschlagventil 46, wie in Fig. 3 angedeutet, stark verzögert oder sogar verhindert werden. Die Dimensionierung einer solchen Drosselklappe wäre z. B. so zu wählen, daß das Ausbringen eines Schmiermittel-Tröpfchens 2 nicht behindert, aber ein Nachfließen von Schmiermittel 4 etwa durch die Kapillarwirkung nach dem Ende der Kontraktion möglich ist.

Vorliegend dient also ein (an sich bekanntes) piezoelektrisches Röhrchen 1 dem Einsatz zur Mikrodosierung eines Schmiermittels 4 und der Abgabe der ausgebrachten Tröpfchen 2 in einen das zu schmierende Lager durchströmenden Fördergasstrom 6, wie er z. B. bei der eingangs erwähnten Öl-Luft-Schmierung bisher eingesetzt wurde. Die bekannten Öl-Luft-Schmiereinrichtungen sind also mit der vorliegenden Schmiereinrichtung prinzipiell nachrüstbar.

Nach Fig. 1 ist das Röhrchen 1 in einer Ummantelung oder Einbettmasse 8 eingebettet oder gehaltert. Die Einbettmasse 8, z. B. ein Kunststoff, bedeckt dabei auch die Innenwand des Röhrchens 1. Der freie Innendurchmesser d innerhalb des piezoelektrischen Röhrchens 1 beträgt damit weniger als 1 mm. Die Einbettmasse 8 steht an beiden Enden des Röhrchens 1 über. An der Austrittsseite des Schmiermittels 4 ist die Einbettmasse 8 mit einer sich verjüngenden Austrittsöffnung 10 versehen. Dies führt zu einer Erhöhung der Ausbringgeschwindigkeit für die Tröpfchen 2. Dem Röhrchen 1 ist somit an der Austrittsseite des Schmiermittels 4 eine sich verjüngende Austrittsöffnung 10 zugeordnet.

Das Röhrchen 1 ist an der Eintrittsseite des Schmiermittels 4 mit einem Schmiermittel-Zuführungsrohr 12 versehen, das insbesondere aus einem Metall besteht. Die Konstruktion ist speziell so vorgenommen, daß das Schmiermittel-Zuführungsrohr 12 in der Einbettmasse 8 endet. Das Schmiermittel-Zuführungsrohr 12 ist über ein Rückschlagventil mit einem Schmiermittelbehälter verbunden. Rückschlagventil und Schmiermittelbehälter sind später in Fig. 3 gezeigt.

Aus Fig. 1 und 2 ist ersichtlich, daß das Röhrchen 1 in einem Führungsrohr 14 für das Fördergas 6 untergebracht ist. Dieses Führungsrohr 14 besteht bevorzugt gleichfalls aus einem Metall. Speziell ist das Röhrchen 1 samt Einbettmasse 8 axial im Führungsrohr 14 gehaltert. Hierzu dient ein Positionshalter 16, der gemäß Fig. 2 sternförmig mit Zentralring ausgebildet ist. Auch dieser Positionshalter 16 besteht bevorzugt aus einem Metall. Der ringförmige zentrale Teil des Positionshalters 16 liegt eng auf dem Mantel des piezoelektrischen Röhrchens 1 auf und kontaktiert somit dessen äußere Elektrode. Die innere Elektrode ist mit einer Abgriffleitung 18 versehen, die eine elektrische Verbindung zum Schmiermittel-Zuführungsrohr 12 herstellt. Dieses Schmiermittel-Zuführungsrohr 12 ist seitwärts durch das Führungsrohr 14 hindurchgeführt und dabei im Innenraum um 90° abgebogen. Zur seitwärtigen Hindurchführung ist eine Dichtungsmanschette 20 vorgesehen, die bevorzugt aus einem elektrisch isolierenden Material besteht, z. B. aus Kunststoff.

Das Führungsrohr 14 für das Fördergas 6 weist eingangsseitig ein den Fördergas-Strom 6 im Querschnitt erweiterndes Eingangsstück 22 auf. Entsprechend weist es ausgangsseitig ein den Fördergas-Strom 6 im Querschnitt verengendes Ausgangsstück 24 auf. Die beiden Stücke 22, 24 sind jeweils endseitig auf das Führungsrohr 14 aufsteckbar, was eine einfache Montage ermöglicht. Die Steckhalterungen sind mit 26 bzw. 28 bezeichnet. Die Steckhalterung 28 dient gleichzeitig zur Halterung der Enden der drei Arme des Positionshalters 16. Zur Vermeidung von Turbulenzen im Fördergas-Strom 6 liegt die sich verjüngende Austrittsöffnung 10 im sich verengenden Ausgangsstück 24 jedoch in einem Bereich ohne oder mit nur unwesentlichem Unterdruck. Somit wird im Fördergas 6 die Ausbildung von Turbulenzen soweit wie möglich vermieden. In dieses Fördergas 6 wird somit das Schmiermittel 4 in Form der Tröpfchen 2 ohne Verwirbelung eingebracht. Eine Verwirbelung würde nur einzelne Schmiermitteltropfen durch Wandkontakt daran hindern, rechtzeitig an die Lagerstellen zu gelangen.

Als Schmiermittel 4 wird bevorzugt ein Öl vorgegebener Viskosität verwendet. Als Fördergas 6 ist bevorzugt Preßluft vorgesehen, die von einem Überdruckerzeuger geliefert wird.

Aus Fig. 1 wird weiter deutlich, daß zwei elektrische Anschlüsse 30, 32 vorgesehen sind, an die die elektrische Spannung U mit der Frequenz f gelegt wird. Der hier speziell auf Masse oder Erdpotential gelegte Anschluß 30 ist über das Führungsrohr 14 und die drei Arme des Positionshalters 16 sowie dessen zentralen Ring mit der Außenelektrode des piezoelektrischen Röhrchens 1 verbunden. Der Anschluß 32 ist dagegen über das Schmiermittel-Zuführungsrohr 12 und die Verbindungsleitung 18 mit der Innenelektrode dieses Röhrchens 1 verbunden. Die Dichtungsmanschette 20 dient hier zur Isolierung. Natürlich können auch andere Anschlußwege der Anschlüsse 30, 32 zur Außen- bzw. Innenelektrode gewählt werden.

In Fig. 3 ist dargestellt, in welcher Form das piezoelektrische Röhrchen 1 als Stellglied in einem Regelkreis, hier speziell in einem Temperaturregelkreis, verwendet werden kann. Dieser Temperaturregelkreis wird hier im Zusammenhang mit einem Wälzlager 34 verwendet, das zur Halterung einer hochtourig drehenden Welle 36 vorgesehen ist. Die Drehung der Welle 36 ist durch einen gekrümmten Pfeil 38 verdeutlicht. Über dem Wälzlager 34 besteht ein Gasdruckgradient, der durch das zugeführte Fördergas 6 aufgebaut wird. Zur Aufrechterhaltung dieses Gradienten dient ein Überdruckerzeuger 40, insbesondere eine Druckluftpumpe, die an eine Luftleitung 42 angeschlossen ist, welche wiederum mit dem Eingangsstück 22 in Verbindung steht. Zur Unterstützung des Überdruckerzeugers 40, d. h. zur Vergrößerung des Gasdruckgradienten, kann auf der abgewandten Seite des Wälzlagers 34 ein Unterdruckerzeuger vorgesehen sein, was durch einen Luftsogpfeil 44 verdeutlicht ist. Das Ausgangsstück 24 ist direkt vor dem zu schmierenden Lager 34 positioniert, d. h. in einem geringen Abstand davor, um zum einen die Regelzeit kleinzuhalten und zum anderen ein Abdriften der Tröpfchen 2 an die Wand des Ausgangsstücks 24 und in Bereiche außerhalb des Lagers 34 zu vermeiden. Auf diese Weise wird also das Schmiermittel 4 gezielt ins Lager 34 eingebracht.

Gemäß Fig. 3 ist das Schmiermittel-Zuführungsrohr 12 über ein Rückschlagventil 46 an einen Schmiermittelbehälter 48 angeschlossen. Dieser braucht nicht notwendigerweise unter Druck zu stehen; der Transport des Schmiermittels 4 erfolgt durch den bekannten Kapillareffekt.

Die Anschlüsse 30, 32 sind mit den Ausgängen eines elektrischen Impulsgebers 50 verbunden. Dieser ist Bestandteil des Regelkreises und sorgt dafür, daß die Frequenz f und/oder die elektrische Spannung U, mit der das Röhrchen 1 beaufschlagt wird/ist, vom Regelkreis geführt sind/ist. Dazu ist er an den Ausgang einer Steuerlogik 52 angeschlossen. Diese Steuerlogik 52 erfüllt als wesentliche Funktion die eines Reglers. Sie ist eingangsseitig mit einem das zu schmierende Lager 34 überwachenden Temperatursensor 54 verbunden. Weiterhin ist sie eingangsseitig mit einem Drehzahlsensor 56 verbunden, der die Drehzahl der Welle 36 erfaßt. Das Ausgangssignal des Drehzahlsensors 56 dient in der Steuerlogik 52 zur Ermittlung eines drehzahlabhängigen Basiswertes oder Sollwertes für die Schmierung. Bei fester Drehzahl wird die Schmierung von der Steuerlogik 52 nach Maßgabe der vom Temperatursensor 54 ermittelten Temperatur eingestellt und dabei optimiert. Steigt die Temperatur, so ist dies ein Zeichen für unzureichende Schmierung, und die Steuerlogik 52 paßt die dosierte Schmiermittelmenge entsprechend an. Die Steuerlogik 52 kann dabei entscheiden, ob eine Erhöhung oder eine Verminderung der Schmiermittelmenge angezeigt ist. Dies kann beispielsweise dadurch geschehen, daß die Steuerlogik 52 bei einer Temperaturerhöhung durch Erhöhung der Schmiermittelzufuhr versucht, die Temperatur abzusenken. Gelingt dies nicht, so wird die Schmiermittelmenge von der Steuerlogik 52 nach einiger Zeit wieder reduziert, und zwar solange, bis eine minimale Temperatur durchlaufen wurde. Diese ist die einzustellende, optimale Arbeitstemperatur.

Aus dieser Funktion des in Fig. 3 dargestellten Temperatur-Regelkreises wird deutlich, daß die Abgabe von Schmiermittel 4 in Kleinstmengen mittels des Röhrchens 1 eine optimale Anpassung an den Schmiermittelbedarf ermöglicht. Die Nähe der Dosierung zum Schmierort und der direkte Transport des Schmiermittels 4 durch das Fördergas 6 in das Lager 34 führen zu einer direkten Wirkung bei Anpassung oder Korrektur der Schmiermittelmenge. Diese Wirkung setzt außerordentlich schnell ein; die Regelzeit des Regelkreises liegt dabei im Sekunden-Bereich.

Der Regelkreis optimiert sich selbst, ohne daß es dazu eines Eingriffs einer Bedienungsperson bedarf. Der Impulsgeber kann einzelne Impulse erzeugen oder eine Hochfrequenz-Wechselspannungsquelle impulsweise ein- und ausschalten. Auf diese Weise können sowohl einzelne Schmiermitteltropfen oder Serien von Schmiermitteltropfen impulsweise abgegeben werden. Außerdem kann die Tropfengröße durch Veränderung der elektrischen Signalamplitude und/oder Signalfrequenz an den jeweiligen Bedarfsfall angepaßt werden.

**Patentansprüche**

1. Schmiereinrichtung für ein Lager, über dem ein Gasdruckgradient besteht, mit dem eine dosierte Schmiermittelmenge in das lager eingebracht wird, insbesondere für ein hochtourig drehendes Lager, **gekennzeichnet** durch ein als Pumpe betreibbares piezoelektrisches Röhrchen (1), dem das Schmiermittel (4) zuführbar und von dem das Schmiermittel (4) in ein das zu schmierende Lager durchströmendes Fördergas (6) einbringbar ist, wobei das Fördergas (6) aufgrund des Druckgradienten durch das Lager (34) hindurchleitbar ist, durch mindestens einen Sensor (54) für den Betriebszustand des Lagers (34) und durch eine an den Sensor angeschlossene elektrische Steuereinrichtung (50, 52) für das piezoelektrische Röhrchen und durch die Unterbringung des Röhrchens (1) in einem Führungsrohr (14) für das Fördergas.

2. Schmiereinrichtung nach Anspruch 1, **dadurch gekennzeichnet,** daß das als Pumpe betreibbare piezoelektrische Röhrchen (1) Schmiermitteltropfen in den in gleicher Richtung vorbeiströmenden Fördergasstrom (6) hineinschleudert.

3. Schmiereinrichtung nach Anspruch 1 und/oder 2, **dadurch gekennzeichnet**, daß die Größe der Schmiermitteltropfen und/oder die Zahl der Schmiermitteltropfen je Zeiteinheit durch die Zahl der elektrischen Spannungsimpulse je Zeiteinheit und durch deren Amplitude beeinflußbar ist.

4. Schmiereinrichtung nach einem oder mehreren der Ansprüche 1 bis 3, **dadurch gekennzeichnet,** daß das piezoelektrische Röhrchen mit Hochfrequenzimpulsen beaufschlagt wird.

5. Schmiereinrichtung nach einem oder mehreren der Ansprüche 1 bis 4, **dadurch gekennzeichnet,** daß die Formgebung und Einbauweise des piezoelektrischen Röhrchens (1) im Führungsrohr (14) so ausgeführt ist, daß die herausgeschleuderten Tröpfchen bei minimierter Turbulenz des Fördermediums ohne vorherigen Wandkontakt direkt ins Lager geleitet werden.

6. Schmiereinrichtung nach einem oder mehreren der Ansprüche 1 bis 5, **dadurch gekennzeichnet,** daß das Führungsrohr (14) für das Fördergas (6) bevorzugt aus einem Metall besteht.

7. Schmiereinrichtung nach einem oder mehreren der Ansprüche 1 bis 6, **dadurch gekennzeichnet,** daß das Röhrchen (1) axial im Führungsrohr (14) mittels eines Positionshalters (16) befestigt ist, der insbesondere sternförmig ausgebildet ist und aus einem Metall besteht.

8. Schmiereinrichtung nach einem oder mehreren der Ansprüche 1 bis 7, **dadurch gekennzeichnet,** daß das Röhrchen (1) an der Austrittsseite des Schmiermittels (4) mit einer sich verjüngenden Austrittsöffnung (10) versehen ist.

9. Schmiereinrichtung nach einem oder mehreren der Ansprüche 1 bis 8, **dadurch gekennzeichnet,** daß das Röhrchen (1) in einer Einbettmasse (8) gehaltert ist.

10. Schmiereinrichtung nach einem oder mehreren der Ansprüche 1 bis 9, **dadurch gekennzeichnet,** daß das Röhrchen (1) an der Eintrittsseite des Schmiermittels (4) mit einem Schmiermittel-Zuführungsrohr (12) versehen ist, das insbesondere aus einem Metall besteht.

11. Schmiereinrichtung nach Anspruch 10, **dadurch gekennzeichnet,** daß das Schmiermittel- Zuführungsrohr (12) seitwärts durch das Führungsrohr (14) hindurchgeführt ist.

12. Schmiereinrichtung nach Anspruch 11, **dadurch gekennzeichnet,** daß zur seitwärtigen Hindurchführung eine Dichtungsmanschette (20) vorgesehen ist, die bevorzugt aus einem elektrisch isolierenden Material besteht.

13. Schmiereinrichtung nach einem oder mehreren der Ansprüche 6 bis 12, **dadurch gekennzeichnet,** daß das Führungsrohr (14) für das Fördergas (6) eingangsseitig ein den Gasstrom im Querschnitt erweiterndes Eingangsstück (22) und ausgangsseitig ein den Gasstrom im Querschnitt verengendes Ausgangsstück (24) aufweist.

14. Schmiereinrichtung nach Anspruch 8 und 13, **dadurch gekennzeichnet,** daß die sich verjüngende Austrittsöffnung (10) des Röhrchens (1) im sich verengenden Ausgangsstück (24) liegt.

15. Schmiereinrichtung nach Anspruch 13 oder 14, **dadurch gekennzeichnet,** daß das Eingangsstück (22) an einen Überdruckerzeuger (40) für das Fördergas (6) angeschlossen und das Ausgangsstück (24) direkt an dem zu schmierenden Lager (34) positioniert ist.

16. Schmiereinrichtung nach einem oder mehreren der Ansprüche 1 bis 15, **dadurch gekennzeichnet,** daß als Schmiermittel (4) ein Öl vorgegebener Viskosität und als Fördergas (6) Luft vorgesehen ist.

17. Schmiereinrichtung nach einem oder mehreren der Ansprüche 1 bis 16, **dadurch gekennzeichnet,** daß das Röhrchen (1) aus einer Piezokeramik besteht und insbesondere einen Innendurchmesser von etwa 1 mm aufweist.

18. Schmiereinrichtung nach einem oder mehreren der Ansprüche 1 bis 17, **dadurch gekennzeichnet,** daß das Röhrchen (1) mit einem Schmiermittel-Zuführungsrohr (12) verbunden ist, das über ein Rückschlagventil (46) mit einem Schmiermittelbehälter (48) in Verbindung steht.

19. Schmiereinrichtung nach Anspruch 18, **dadurch gekennzeichnet,** daß das Röhrchen (1) in einer Einbettmasse (8) untergebracht ist, und daß das Schmierstoff-Zuführungsrohr (12) in der Einbettmasse (8) endet.

20. Schmiereinrichtung nach einem oder mehreren der Ansprüche 1 bis 19, **dadurch gekennzeichnet,** daß das piezoelektrische Röhrchen (1) Stellglied in einem Regelkreis ist.

21. Schmiereinrichtung nach Anspruch 20, **dadurch gekennzeichnet,** daß als Regelkreis ein Temperaturregelkreis vorgesehen ist.

22. Schmiereinrichtung nach Anspruch 20 oder 21, **dadurch gekennzeichnet,** daß das piezoelektrische Röhrchen (1) von einem Regler (52) gespeist ist, der eingangsseitig mit einem das zu schmierende Lager (34) überwachenden Temperatursensor (54) verbunden ist.

23. Schmiereinrichtung nach Anspruch 22, **dadurch gekennzeichnet,** daß dem Regler (52) von einem Drehzahlsensor (56) ein Sollwert vorgegeben ist.

24. Schmiereinrichtung nach einem der Ansprüche 20 bis 23, **dadurch gekennzeichnet,** daß die Frequenz (f) und/oder die elektrische Spannung (U), mit der das Röhrchen (1) beaufschlagbar sind/ist, vom Regelkreis geführt sind/ist.

25. Schmiereinrichtung nach einem oder mehreren der Ansprüche 1 bis 24, **dadurch gekennzeichnet,** daß das piezoelektrische Röhrchen (1) über ein Schmiermittel-Zuführungsrohr (12) einerseits sowie über ein Führungsrohr (14) und einem Positionshalter (16) andererseits mit je einem elektrischen Anschluß (30, 32) verbunden ist.

## Claims

1. A lubricating device for a bearing, across which a gas pressure gradient exits, with which a dosed quantity of lubricant is introduced into the bearing, in particular for a high-speed rotating bearing, characterised by a piezoelectric tubule (1) driven as a pump, to which is supplied the lubricant (4) and from which the lubricant (4) is able to be introduced into the conveying gas flowing through the bearing to be lubricated, wherein the conveying gas (6) is able to be led through the bearing (34) because of the pressure gradient, characterised by at least one sensor (54) for the operating state of the bearing (34) and by an electric control device (50,52) for the piezoelectric tubule connected to the sensor and by the accomodation of the tubule (1) in a guide tube (14) for the conveying gas.

2. A lubricating device according to claim 1, characterised in that the piezoelectric tubule (1), able to be operated as a pump, casts drops of lubricant into the conveying gas current (6) flowing past in the same direction.

3. A lubricating device according to claim 1 and/or 2, characterised in that the size of the drops of lubricant and/or the number of drops of lubricant per unit time can be influenced by the number of electric voltage pulses per unit time and by their amplitude.

4. A lubricating device according to one or several of claims 1 to 3, characterised in that the piezoelectric tubule is acted upon by high frequency pulses.

5. A lubricating device according to one or several of claims 1 to 4, characterised in that the shaping and method of installing the piezoelectric tubule (1) in the guide tube (14) is effected so that the drops ejected with minimised turbulence of the conveying medium are led directly to the bearing without prior wall contact.

6. A lubricating device according to one or several of claims 1 to 5, characterised in that the guide tube (14) for the conveying gas (6) consists preferably of metal.

7. A lubricating device according to one or several of claims 1 to 6, characterised in that the tubule (1) is secured axially in the guide tube (14) by means of a position holder (16), which is formed in particular in the shape of a star and consists of a metal.

8. A lubricating device according to one or several of claims 1 to 7, characterised in that the tubule (1) on the outlet side of the lubricant (4) is provided with a tapering outlet opening (10).

9. A lubricating device according to one or several of claims 1 to 8, characterised in that the tubule (1) is held in an embedding mass (8).

10. A lubricating device according to one or several of claims 1 to 9, characterised in that the tubule (1) is provided on the inlet side of the lubricant (4) with a lubricant supply tube (12), which consists in particular of metal.

11. A lubricating device according to claim 10, characterised in that the lubricant supply tube (12) is passed laterally through the guide tube (14).

12. A lubricating device according to claim 11, characterised in that for lateral passage a sealing collar (20) is provided, which consists preferably of an electrically insulating material.

13. A lubricating device according to one or several of claims 6 to 12, characterised in that the guide tube (14) for the conveying gas (6) has on the inlet side an inlet piece (22) expanding the gas flow in cross-section and on the outlet side has an outlet piece (24) constricting the gas flow in cross-section.

14. A lubricating device according to claim 8 and 13, characterised in that the tapering outlet opening (10) of the tubule (1) lies in the constricted outlet piece (24).

15. A lubricating device according to claim 13 or 14, characterised in that the inlet piece (22) is connected to an overpressure generator (40) for the conveying gas (6) and the outlet piece (24) is positioned directly at the bearing to be lubricated (34).

16. A lubricating device according to one or several of claims 1 to 15, characterised in that an oil of predetermined viscosity is provided as lubricant (4) and air is provided as conveying gas (6).

17. A lubricating device according to one or several of claims 1 to 16, characterised in that the tubule (1) consists of piezoceramics and has in particular an inner diameter of approx. 1mm.

18. A lubricating device according to one or several of claims 1 to 17, characterised in that the tubule (1) is connected to a lubricant supply tube (12), which is connected to a lubricant container (48) by way of a return valve (46).

19. A lubricating device according to claim 18, characterised in that the tubule (1) is accommodated in an embedding mass (8), and in that the lubricant supply tube (12) terminates in the embedding mass (8).

**20.** A lubricating device according to one or several of claims 1 to 19, characterised in that the piezoelectric tubule (1) is a correcting element in a control circuit.

**21.** A lubricating device according to claim 20, characterised in that a temperature control circuit is provided as control circuit.

**22.** A lubricating device according to claim 20 or 21, characterised in that the piezoelectric tubule (1) is fed by a regulator (52), which on the inlet side is connected with a temperature sensor (54) monitoring the bearing (34) to be lubricated.

**23.** A lubricating device according to claim 22, characterised in that a desired value is given to the regulator (52) by a speed sensor (56).

**24.** A lubricating device according to one of claims 20 to 23, characterised in that the frequency (f) and/or the electric voltage (U) which can act upon the tubule (1) is/are controlled by the control circuit.

**25.** A lubricating device according to one or several of claims 1 to 24, characterised in that the piezoelectric tubule (1) is connected to a respective electric terminal (30,32) by way of a lubricant supply tube (12), on the one hand, and by way of a guide tube (14) and a position holder (16), on the other hand.

**Revendications**

**1.** Dispositif de lubrification pour un palier, dans lequel existe un gradient de pression de gaz, grâce auquel une quantité dosée de lubrifiant est introduite dans le palier, notamment pour un palier tournant à grande vitesse, caractérisé par un petit tube piézoélectrique (1) pouvant fonctionner en tant que pompe et auquel le lubrifiant (4) peut être envoyé et par lequel le lubrifiant (4) peut être introduit dans un gaz d'entraînement (6) traversant le palier à lubrifier, le gaz d'entraînement (6) pouvant traverser le palier (34) en raison de la présence du gradient de pression, par au moins un capteur (54) de l'état de fonctionnement du palier (34) et par un dispositif de commande électrique (50,52) raccordé au capteur et prévu pour le petit tube piézoélectrique, et par l'installation du petit tube (1) dans un tube de guidage (14) pour le gaz d'entraînement.

**2.** Dispositif de lubrification suivant la revendication 1, caractérisé par le fait que le petit tube piézoélectrique pouvant fonctionner en tant que pompe accélère l'introduction de gouttelettes de lubrifiant dans le courant de gaz d'entraînement (6) qui circule dans la même direction.

**3.** Dispositif de lubrification suivant les revendications 1 et/ou 2, caractérisé par le fait que la taille des gouttelettes de lubrifant et/ou le nombre des gouttelettes de lubrifiant par unité de temps peut être influencé par le nombre des impulsions de tension électrique par unité de temps et par leur amplitude.

**4.** Dispositif de lubrification suivant une ou plusieurs des revendications 1 à 3, caractérisé par le fait que le petit tube piézoélectrique est chargé par des impulsions à haute fréquence.

**5.** Dispositif de lubrification suivant une ou plusieurs des revendications 1 à 4, caractérisé par le fait que la forme et le mode de montage du petit tube piézoélectrique (1) dans le tube de guidage (14) sont agencés de manière que les gouttelettes accélérées en direction de l'extérieur sont introduites directement dans le palier, dans le cas d'une turbulence minimale du milieu d'entraînement, sans contact préalable avec les parois.

**6.** Dispositif de lubrification suivant une ou plusieurs des revendications 1 à 5, caractérisé par le fait que le tube de guidage (14) pour le gaz d'entraînement (6) est réalisé de préférence en un métal.

**7.** Dispositif de lubrification suivant une ou plusieurs des revendications 1 à 6, caractérisé par le fait que le petit tube (1) est fixé axialement dans le tube de guidage (14) au moyen d'un dispositif de maintien en position (16), qui est agencé notamment en forme d'étoile et est réalisé en un métal.

**8.** Dispositif de lubrification suivant une ou plusieurs des revendications 1 à 7, caractérisé par le fait que le petit tube (1) comporte, au niveau du côté de sortie du lubrifiant (4), une ouverture de sortie rétrécie (10).

9. Dispositif de lubrification suivant l'une ou plusieurs des revendications 1 à 8, caractérisé par le fait que le petit tube (1) est retenu dans une masse de scellement (8).

10. Dispositif de lubrification suivant une ou plusieurs des revendications 1 à 9, caractérisé par le fait que le petit tube (1) comporte, sur le côté entrée du lubrifiant (4), un tube (12) d'amenée du lubrifiant, qui est réalisé notamment en un métal.

11. Dispositif de lubrification suivant la revendication 10, caractérisé par le fait que le tube (12) d'amenée du lubrifiant traverse latéralement le tube de guidage (14).

12. Dispositif de lubrification suivant la revendication 11, caractérisé par le fait que pour la traversée latérale il est prévu un manchon d'étanchéité (20), qui est réalisé de préférence en un matériau électriquement isolant.

13. Dispositif de lubrification suivant une ou plusieurs des revendications 6 à 12, caractérisé par le fait que le tube de guidage (14) pour le gaz d'entraînement (6) comporte, côté entrée, un élément d'entrée (22) qui élargit en coupe transversale le courant de gaz, et, côté sortie, un élément de sortie (24) qui rétrécit en coupe transversale le courant de gaz.

14. Dispositif de lubrification suivant les revendications 8 et 13, caractérisé par le fait que l'ouverture de sortie rétrécie (10) du petit tube (1) est située dans l'élément de sortie rétrécie (24).

15. Dispositif de lubrification suivant les revendications 13 ou 14, caractérisé par le fait que l'élément d'entrée (22) est raccordé à un générateur de surpression (40) pour le gaz d'entraînement (6) et que l'élément de sortie (24) est positionné directement sur le palier à lubrifier (34).

16. Dispositif de lubrification suivant une ou plusieurs des revendications 1 à 15, caractérisé par le fait qu'il est prévu une huile de viscosité prédéterminée en tant que fluide de lubrification (4) et de l'air en tant que gaz d'entraînement (6).

17. Dispositif de lubrification suivant une ou plusieurs des revendications 1 à 16, caractérisé par le fait que le petit tube (1) est réalisé en une piézocéramique et possède notamment un diamètre intérieur d'environ 1 mm.

18. Dispositif de lubrification suivant une ou plusieurs des revendications 1 à 17, caractérisé par le fait que le petit tube (1) est raccordé à un tube (12) d'alimentation en lubrifiant, qui est raccordé à un réservoir de lubrifiant (48) par l'intermédiaire d'une soupape antiretour (46).

19. Dispositif de lubrification suivant la revendication 18, caractérisé par le fait que le petit tube (1) est logé dans une masse de scellement (8), et que le tube (12) d'alimentation en lubrifiant se termine dans la masse de scellement (8).

20. Dispositif de lubrification suivant une ou plusieurs des revendications 1 à 19, caractérisé par le fait que le petit tube piézoélectrique (1) est un élément de réglage dans un circuit de régulation.

21. Dispositif de lubrification suivant la revendication 20, caractérisé par le fait qu'il est prévu, comme circuit de régulation, un circuit de régulation de la température.

22. Dispositif de lubrification suivant la revendication 20 ou 21, caractérisé par le fait que le petit tube piézoélectrique (1) est alimenté par un régulateur (52), qui est raccordé, côté entrée, à un capteur de température (54) contrôlant le palier à lubrifier (34).

23. Dispositif de lubrification suivant la revendication 22, caractérisé par le fait qu'une valeur de consigne est prédéterminée pour le régulateur (52) à partir d'un capteur (56) de la vitesse de rotation.

24. Dispositif de lubrification suivant une ou plusieurs des revendications 20 à 21, caractérisé par le fait que la fréquence (f) et/ou la tension électrique (U), avec laquelle le petit tube (1) peut être chargé, est/sont pilotées par le circuit de régulation.

25. Dispositif de lubrification suivant une ou plusieurs des revendications 1 à 24, caractérisé par le fait que le petit tube piézoélectrique (1) est raccordé, d'une part, par l'intermédiaire d'un tube (12) d'alimentation en lubrifiant, ainsi que par l'intermédiaire d'un tube de guidage (14), et, d'autre part, d'un dispositif de retenue en position (16), respectivement à une borne électrique (30,32).

FIG 1

FIG 2

12

FIG 3